# EUROPÄISCHE PATENTSCHRIFT

(11) **EP 1 508 470 B1**
(45) Veröffentlichungstag und Bekanntmachung des Hinweises auf die Patenterteilung: **24.06.2009**
(21) Anmeldenummer: 04003964.6
(22) Anmeldetag: 21.02.2004
(51) Int. Cl.: B60N 2/48

(54) **Kopfstütze für Fahrzeuge**
Vehicle headrest
Appui-tête pour véhicules

(30) Priorität: 22.08.2003 DE 20313127 U
(43) Veröffentlichungstag der Anmeldung: 23.02.2005
(73) Patentinhaber: Key Plastics Germany GmbH, 57368 Lennestadt (DE)
(72) Erfinder: Lohmann, Horst, 59846 Sundern (DE); Brakel, Thorsten, 59889 Eslohe (DE); Gomes-Buco, José, 59757 Arnsberg (DE)
(74) Vertreter: Köchling, Conrad-Joachim

(56) Entgegenhaltungen:
- DE-A1- 10 145 240
- US-A- 6 129 421

## Beschreibung

Die Erfindung betrifft eine Kopfstütze für Fahrzeuge, insbesondere Kraftfahrzeuge, wobei die Kopfstütze schwenkbar an einem Haltebügel befestigt ist, der am Rückenteil eines Sitzes angebracht ist, wobei die Kopfstütze in der aufgeschwenkten Gebrauchslage verriegelbar ist und nach Entriegelung in eine Nichtgebrauchslage verschwenkbar ist.

Im Stand der Technik sind klappbare Kopfstützen für Kraftfahrzeuge bekannt, wobei die Kopfstützen am Rückenteil eines Sitzes oder hinter dem Rückenteil eines Sitzes befestigt sind. Bekannterweise sind die Kopfstützen in eine Gebrauchslage hochschwenkbar, in der die Kopfstützen quasi eine Verlängerung des Rückenteiles des Sitzes bilden. In dieser Stellung sind die Kopfstützen üblicherweise verriegelt, damit diese Gebrauchsposition eingehalten wird und auch im Falle einer crashbedingten Beschleunigung, insbesondere einer Vorwärtsbeschleunigung in Normalfahrtrichtung des Fahrzeuges, in dieser Position arretiert sind. Um im Falle der Nichtbenutzung der Kopfstützen die Möglichkeit zu schaffen, das Blickfeld nach hinten, insbesondere bei an den Rücksitzen angeordneten Kopfstützen, für den Fahrer frei zu halten, sind diese Kopfstützen auch in eine Nichtgebrauchslage nach vorn verschwenkbar. Um die Nichtgebrauchslage einstellen zu können, ist es bisher notwendig, die Kopfstützen aus der Gebrauchslage durch Betätigung eines Hebels, Knopfes oder dergleichen zu entriegeln, so dass diese dann um ein am Haltebügel ausgebildetes Drehlager nach vorn schwenkbar sind. Das Aufrichten der Kopfstützen aus der Nichtgebrauchslage in die Gebrauchslage erfolgt manuell, wobei die Verriegelung der Gebrauchslage dann zwangsweise erfolgt.

Aus der US 61 29 421 ist eine Kopfstütze entsprechend dem Oberbegriff des Anspruchs 1 bekannt.

Ausgehend von diesem Stand der Technik liegt der Erfindung die Aufgabe zugrunde, eine Kopfstütze gattungsgemäßer Art zu schaffen, die ohne Betätigung zusätzlicher Elemente wie Entriegelungsknöpfe oder -hebel aus der Gebrauchslage in die Nichtgebrauchslage verschwenkbar ist. Des Weiteren muss sichergestellt sein, dass diese Kopfstütze in der Gebrauchslage, in der sie hochgeschwenkt ist, verriegelt ist, so dass insbesondere bei einer crashbedingten Vorwärtsbewegung die Kopfstütze nicht selbständig aus der Gebrauchslage nach vorn schwenken kann.

Zur Lösung dieser Aufgabe schlägt die Erfindung vor, dass die Verriegelung durch manuelle Verschwenkung der Kopfstütze aus der Gebrauchslage in die Nichtgebrauchslage entriegelbar ist und dass auf die Verriegelung in der Gebrauchslage eine Gewichtsmasse einwirkt, die bei einer crashbedingten Beschleunigung im Wesentlichen in Normalfahrtrichtung des Fahrzeuges eine Entriegelung verhindert.

Bei der erfindungsgemäßen Kopfstütze ist eine Verriegelung vorgesehen, die bewirkt, dass die Kopfstütze beim Verschwenken aus der Nichtgebrauchslage in die Gebrauchslage verriegelt ist. Des Weiteren ist die Verriegelung so ausgebildet, dass die Kopfstütze manuell aus der Gebrauchslage in die Nichtgebrauchslage verschwenkt werden kann, wobei bei dieser Betätigung selbständig die Entriegelung erfolgt. Um zu vermeiden, dass in einem Crashfall die Kopfstütze selbständig aus der Gebrauchslage in die Nichtgebrauchslage verschwenkt, ist eine Gewichtsmasse vorgesehen, die auf die Verriegelung in der Gebrauchslage einwirkt und zwar in der Weise, dass bei einer crashbedingten Beschleunigung, die im Wesentlichen in Normalfahrtrichtung des Fahrzeuges gerichtet ist, eine Entriegelung der Verriegelung verhindert ist. Die Gewichtsmasse wirkt in geeigneter Weise auf die Verriegelungseinrichtung ein, so dass die Entriegelung im Crashfall ausgeschlossen ist.

Trotzt dieser im Crashfall sicheren Verriegelung ist erreicht, dass die Kopfstütze aus der Gebrauchslage in die Nichtgebrauchslage manuell verschwenkt werden kann, so dass eine einfache Handhabung ohne zusätzliche Bedienung von Entriegelungsknöpfen oder dergleichen ermöglicht ist.

Bevorzugt ist dabei vorgesehen, dass die Kopfstütze aus der Gebrauchslage in Normalfahrtrichtung nach vorn in die Nichtgebrauchslage schwenkbar ist.

Eine besonders bevorzugte Weiterbildung wird darin gesehen, dass die Kopfstütze als Hohlschale ausgebildet ist, die außenseitig vorzugsweise vollständig gepolstert und/oder mit einem Überzug versehen ist und die innerhalb des Hohlraumes, der von der Hohlschale umgeben ist, das Ende des Haltebügels und den Verriegelungsmechanismus samt Gewichtsmasse aufnimmt.

Durch diese Ausbildung der Kopfstütze ist es möglich, den Verriegelungsmechanismus und die Gewichtsmasse innerhalb des Hohlraumes der Kopfstütze anzuordnen, so dass diese Elemente weder von außen sichtbar noch zugreiflich sind.

Eine weiterhin besonders bevorzugte Ausbildung wird darin gesehen, dass mit dem Haltebügel ein Träger starr verbunden ist, der eine Verriegelungskontur aufweist, dass der Träger in die als Hohlteil ausgebildete Kopfstütze hineinragt und dass innerhalb der hohlen Kopfstütze ein Riegel angeordnet und an der Kopfstütze schwenkbeweglich befestigt ist sowie die auf den Riegel einwirkende, diesen in Schließrichtung beaufschlagende Gewichtsmasse schwenkbeweglich befestigt ist.

Gemäß dieser Ausbildung ist die Verriegelungskontur praktisch gestellfest an dem Haltebügel befestigt, während der Riegel an der bevorzugt als Hohlkörper ausgebildeten Kopfstütze innenseitig schwenkbeweglich gehalten ist und ebenso die auf den Riegel einwirkende, diesen in Schließrichtung drängende Gewichtsmasse.

Besonders bevorzugt ist dabei vorgesehen, dass die Bestandteile des Verriegelungsmechanismusses in Gebrauchslage der Kopfstütze oberhalb des Haltebügels angeordnet sind.

Um eine einfache und auch sichere Funktion zu erreichen ist vorgesehen, dass am Träger die Verriegelungskontur in Form einer als schiefe Ebene ausgebildeten Riegeleingriffsfläche ausgebildet ist und der Riegel einen entsprechend geformten als schiefe Ebene ausgebildeten Verriegelungsvorsprung aufweist, der in der Verriegelungslage an der Riegeleingriffsfläche anliegt.

Gemäß dieser Ausbildung kann die Kopfstütze aus der Gebrauchslage in die Nichtgebrauchslage verschwenkt werden, wobei bei der manuellen Verschwenkung der Kopfstütze der Verriegelungsvorsprung des Riegels entlang der als schiefe Ebene ausgebildeten Riegeleingriffsfläche der Verriegelungskontur bewegt wird und aus der Verriegelungsposition ausgehoben wird, so dass die Kopfstütze in die Nichtgebrauchslage geschwenkt werden kann. Beim Überführen der Kopfstütze aus der Nichtgebrauchslage in die Gebrauchslage läuft der Riegel mit dem Verriegelungsvorsprung auf die Verriegelungskontur auf und wird angehoben bis er über die Verriegelungskontur bewegt ist und mit seinem als schiefe Ebene ausgebildeten Verriegelungsvorsprung hinter die ebenfalls als schief Ebene ausgebildete Riegeleingriffsfläche der Verriegelungskontur einfällt.

Im Crashfall wird der Riegel bei hoch geschwenkter Kopfstütze durch die zusätzliche Gewichtsmasse beaufschlagt und in der Verriegelungsstellung gehalten, so dass ein Verschwenken der Kopfstütze aus der Gebrauchslage in die Nichtgebrauchslage ausgeschlossen ist.

Weiter ist bevorzugt vorgesehen, dass die an der Kopfstütze befestigten Verriegelungselemente und die Gewichtsmasse um zur Schwenkachse der Kopfstütze parallele Achsen schwenkbeweglich angeordnet sind.

Um die Blockadewirkung der zusätzlichen Gewichtsmasse im Crashfall noch zu verbessern ist vorgesehen, dass an dem kopfstützenseitigen Verriegelungselement, insbesondere an dem klinkenartigen Riegel, ein Hebel anliegt und es in der Gebrauchslage der Kopfstütze in Verriegelungslage hält, wobei der Hebel oberhalb des Verriegelungselementes an der Kopfstütze angelenkt ist, die Gelenkachse parallel zur Schwenkachse der Kopfstütze gerichtet ist, und am Hebel die Gewichtsmasse nach Art eines Pendels an einer in der Gebrauchsstellung nach unten gerichteten Verlängerung angeordnet ist, so dass der Hebel bei einer crashbedingten Beschleunigung des Fahrzeuges in Normalfahrtrichtung fest gegen das Verriegelungselement und dieses fest gegen das gestellfeste Verriegelungsteil angedrückt ist.

Eine unter Umständen bevorzugte Weiterbildung wird darin gesehen, dass die Verriegelung bei in Gebrauchslage befindlicher Kopfstütze durch Federkraft unterstützt in Schließlage gehalten ist.

Hierdurch wird die Verriegelung in Gebrauchslage noch sicherer gestaltet, so dass nicht zufällig eine Entriegelung der Kopfstütze erfolgen kann. Die Federkraft ist so eingestellt, dass sie bei manueller Krafteinwirkung auf die Kopfstütze überwunden werden kann, wenn nämlich die Kopfstütze aus der Gebrauchslage in die Nichtgebrauchslage verschwenkt werden soll.

Unter Umständen kann dabei vorgesehen sein, dass zwischen Riegel und Kopfstütze eine Feder eingespannt ist, die den Riegel in Schließrichtung beaufschlagt.

Es kann sich dabei um eine Druckfeder oder vorzugsweise um eine Zugfeder handeln.

Weiterhin ist bevorzugt vorgesehen, dass zwischen dem auf das Verriegelungselement, insbesondere den Riegel, einwirkenden Hebel und der Kopfstütze eine Feder eingespannt ist, die den Hebel in Schließrichtung beaufschlagt.

Um den Bedienkomfort noch zu verbessern kann vorgesehen sein, dass die Kopfstütze aus der Nichtgebrauchslage gegen die Kraft einer Feder bewegbar ist.

Dabei kann vorgesehen sein, dass zwischen Bügel und Kopfstütze eine Feder eingespannt ist, mittels derer die Kopfstütze in die Nichtgebrauchslage verschwenkbar ist.

Vorzugsweise sind die Federkräfte so aufeinander abgestimmt, dass einerseits sichergestellt ist, dass die Verriegelung bei in Gebrauchslage befindlicher Kopfstütze aufrechterhalten ist und dass andererseits sichergestellt ist, dass nach manuellem Lösen der Verriegelung durch Verschwenkung der Kopfstütze aus der Gebrauchslage in die Nichtgebrauchslage die Kopfstütze unter der Wirkung der zusätzlichen Feder vollständig in die Nichtgebrauchslage verschwenkt und durch die Feder vorgespannt gehalten ist. Im Übrigen können die Endlagen der Kopfstütze durch entsprechende Wegbegrenzungsanschläge gesichert sein.

Ein Ausführungsbeispiel der Erfindung ist in der Zeichnung dargestellt und im Folgenden näher beschrieben.

Es zeigt:
- Figur 1: eine erfindungsgemäße Kopfstütze in der Gebrauchslage;

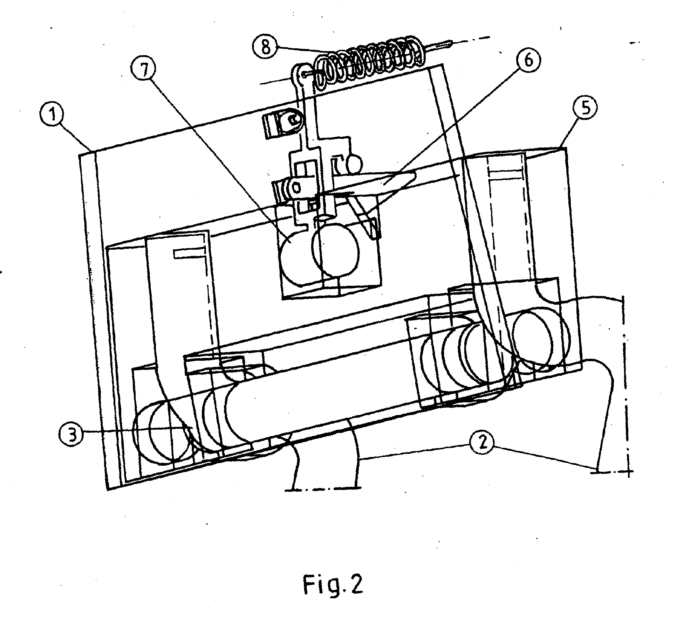

- Figur 2: eine Einzelheit der Figur 1 in vergrößerter Darstellung;
- Figur 3: die Kopfstütze in der Gebrauchslage in Seitenansicht, teilweise geschnitten;
- Figur 4: desgleichen bei teilweise gelöster Verriegelung;
- Figur 5: desgleichen in der Nichtgebrauchslage der Kopfstütze.

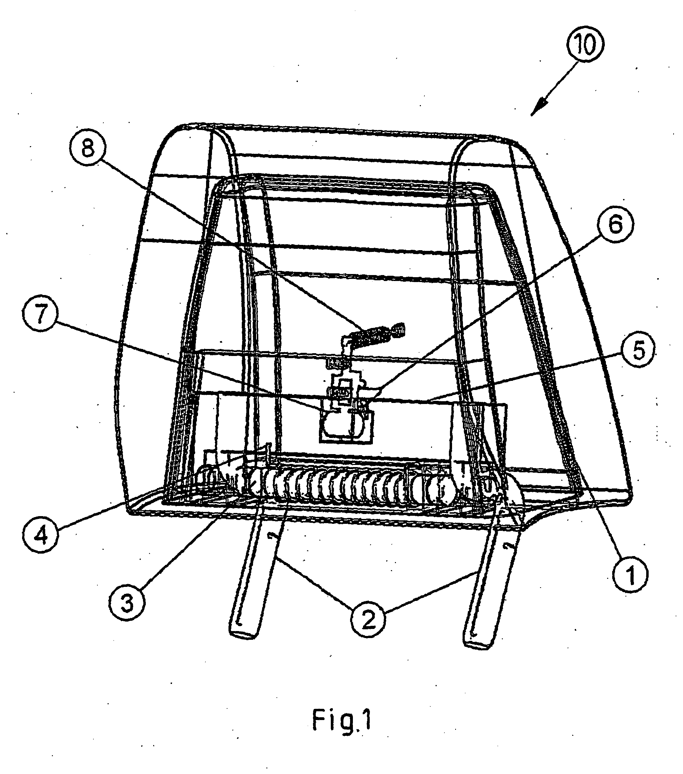

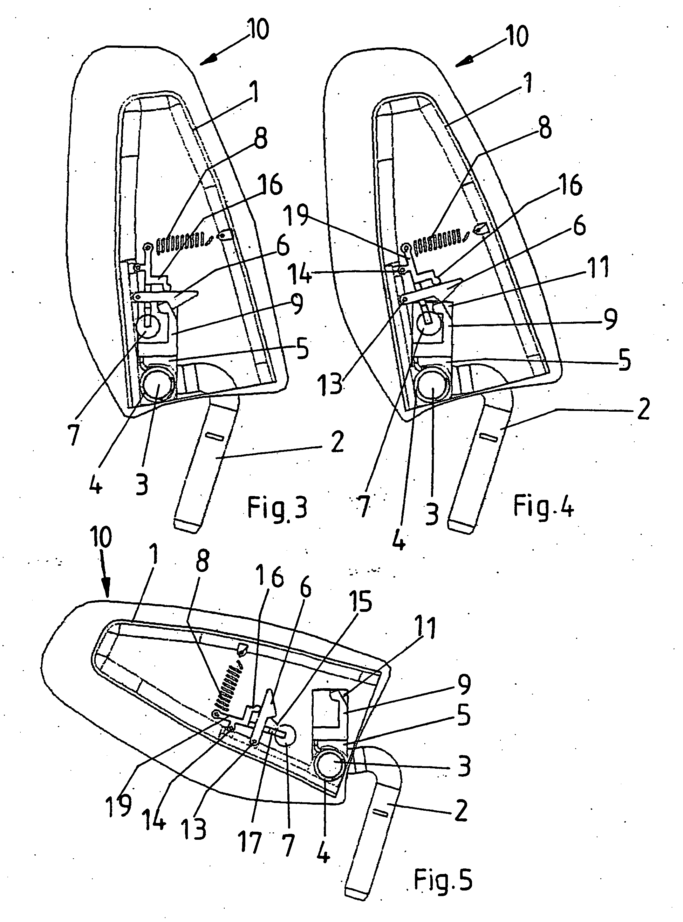

In der Zeichnung ist eine Kopfstütze 10 für Kraftfahrzeuge gezeigt. Die Kopfstütze 10 ist um eine Drehachse 3 mit ihrem Haltebügel gehalten wobei vom Haltebügel üblicherweise Raststangen 2 oder dergleichen abragen. Mittels dieser Raststangen 2 kann die Kopfstütze 10 am Rückenteil eines Sitzes oder hinter dem Rückenteil eines Sitzes eines Kraftfahrzeuges befestigt werden. Die Kopfstütze 10 ist in der aufgeschwenkten Gebrauchslage beispielsweise gemäß Figur 1 verriegelbar und somit in dieser Position sicher gehalten. Nach Entriegelung ist die Kopfstütze in eine Nichtgebrauchslage verschwenkbar, die beispielsweise in Figur 5 gezeigt ist.

Die Verriegelung ist so ausgebildet, dass sie durch manuelle Verschwenkung der Kopfstütze 10 aus der Gebrauchslage gemäß Figur 1 in die Nichtgebrauchslage gemäß Figur 5 entriegelbar ist. Auf die Verriegelung wirkt in der Gebrauchslage eine Gewichtsmasse 7 ein, die bei einer crashbedingten Beschleunigung im Wesentlichen in Normalfahrtrichtung des Fahrzeuges eine Entriegelung verhindert. Die Normalfahrtrichtung des Fahrzeuges ist in den Figuren 3 bis 5 von rechts nach links gerichtet.

Demzufolge ist im Ausführungsbeispiel die Kopfstütze 10 aus der Gebrauchslage gemäß Figur 1 bzw. Figur 3 nach vorn in die Nichtgebrauchslage gemäß Figur 5 verschwenkbar. Die Kopfstütze 10 ist als Hohlschale ausgebildet, wozu ein Insert oder Kopfstützenschalenteil 1 ausgebildet ist, welches außenseitig vollständig oder teilweise gepolstert und/oder mit einem Überzug versehen ist. Innerhalb des Hohlraumes, der von der Hohlschale 1 umgrenzt ist, ist das Ende des Haltebügels mit der Drehachse 3 und der Verriegelungsmechanismus samt Gewichtsmasse 7 untergebracht, so dass eine verdeckte Anordnung erreicht ist, die auch gegen unbefugten Zugriff von außen gesichert ist.

Mit dem Haltebügel ist, wie insbesondere in Figur 5 ersichtlich ist, ein Träger 9 starr verbunden, der nach oben vom Haltebügel abragt. Dieser Träger 9 weist an seiner rechten oberen Randkante eine Verriegelungskontur 11 auf. Der Träger 9 ragt in die als Hohlteil 1 ausgebildete Kopfstütze hinein. Innerhalb der hohlen Kopfstütze (innerhalb des Teiles 1) ist ein Riegel 6 des Verriegelungsmechanismusses angeordnet und bei 13 an dem vorderen Schalenteil der hohlen Kopfstütze schwenkbeweglich befestigt. Die auf den Riegel 6 einwirkende, diesen in Schließrichtung beaufschlagende Gewichtsmasse 7 ist ebenfalls schwenkbeweglich bei 14 an der Schale der Kopfstütze 10 befestigt, und zwar relativ zum Bügel oberhalb der Anlenkstelle 13 des Riegels 6.

Am Träger 9 ist die Verriegelungskontur 11 in Form einer als schiefe Ebene ausgebildeten Riegeleingriffsfläche ausgebildet. Der Riegel 6 weist einen entsprechend geformten, als schiefe Ebene ausgebildeten Verriegelungsvorsprung 15 auf, der in der Verriegelungslage gemäß Figur 3 an der Riegeleingriffsfläche 11 anliegt.

Die an der Kopfstütze 10 befestigten Verriegelungselemente 12 und die Gewichtsmasse 7 sind jeweils um zur Schwenkachse 3 der Kopfstütze parallele Achsen schwenkbeweglich angeordnet. An dem kopfstützenseitigen Verriegelungselement, insbesondere an dem klinkenartigen Riegel 6, liegt ein Hebel 16 oberseitig an und hält in der Gebrauchslage gemäß Figur 3 der Kopfstütze 10 den Riegel 6 in der Verriegelungslage. Dieser Hebel 16 ist bei 14 oberhalb des Verriegelungselementes (12) an der Kopfstütze innenseitig angelenkt, wobei die Gelenkachse parallel zur Schwenkachse 3 der Kopfstütze 10 gerichtet ist. Am Hebel 16 ist über eine starre Verlängerung nach Art eines Pendels die Gewichtsmasse 7 angeordnet, die in der Gebrauchsstellung gemäß Figur 3 an einer nach unten gerichteten Verlängerung 17 befestigt ist.

Hierdurch wird bewirkt, dass der Hebel 16 bei einer crashbedingten Beschleunigung des Fahrzeuges in Normalfahrtrichtung fest gegen das Verriegelungselement 12 gedrängt ist und dieses fest gegen das gestellfeste Verriegelungsteil (11) angedrückt hält, so dass die Kopfstütze 10 nicht selbständig aus der Gebrauchslage gemäß Figur 3 in die Nichtgebrauchslage gemäß Figur 5 verschwenken kann.

Die Verriegelung ist bei in Gebrauchslage befindlicher Kopfstütze 10 gemäß Figur 3 durch die Kraft einer Feder 8 unterstützt in Schließlage gehalten. Dazu ist zwischen dem auf das Verriegelungselement 12 einwirkenden Hebel 16 (an einer Verlängerung 19 des Hebels) und der Kopfstütze (der Kopfstützenschale 1) eine Feder 8 eingespannt, die den Hebel 16 in Schließrichtung beaufschlagt.

Auch die Kopfstütze 10 ist aus der Nichtgebrauchslage gemäß Figur 5 in die Gebrauchslage gemäß Figur 3 gegen die Kraft einer Feder 4 beweglich, wobei diese Feder 4 zwischen dem Bügel mit den Raststangen 2 und der Kopfstütze 10 wirksam ist. Hierdurch wird erreicht, dass nach dem Lösen der Verriegelung beispielsweise in der Stellung gemäß Figur 4 die weitere Schwenkbewegung der Kopfstütze 10 in die Nichtgebrauchslage gemäß Figur 5 durch Unterstützung der Federkraft der Feder 4 erfolgt.

Der Träger 9 der Verriegelungskontur kann durch ein stabiles Ergänzungsteil 5 gebildet sein.

Insgesamt ist die erfindungsgemäße Verriegelung äußerst kostengünstig und funktionell, wobei die gesamte Verriegelung im Wesentlichen nur aus drei Einzelteilen besteht, nämlich dem Riegel 6, der Gewichtsmasse 7 und gegebenenfalls der Feder 8. Bei der Benutzung der Kopfstütze wird die Kopfstütze in der Gebrauchslage gehalten, weil der Riegel 6 von der Gewichtsmasse 7 und der Feder 8 in Schließrichtung belastet ist und somit in Schließlage verbleibt. Sofern die Kopfstütze aus der Gebrauchslage in die Nichtgebrauchslage verschwenkt werden soll, wird die Kopfstütze beispielsweise am oberen Rand erfasst und nach vorn gezogen. Dabei wird der Riegel 6 über die schiefe Ebene nach oben zwangsbewegt, während er gleichzeitig die Gewichtsmasse 7 mitschleppt und die Feder 8 spannt. Sobald der Riegel 10 mit seiner Schräge das Ende der schiefen Ebene erreicht, wie in Figur 4 gezeigt, so liegt gerade die Betätigungskraft an. Der Riegel kann nun öffnen und die Kopfstütze 10 wird freigegeben, so dass sie angetrieben von der Drehfeder 4 um die Drehachse 3 nach vorn klappen kann, in die Position, die in Figur 5 gezeigt ist. Sofern sich die Kopfstütze 10 in der Gebrauchslage befindet und es tritt ein Crashfall ein, so wird die Gesichtsmasse 7 nach vorn beschleunigt und erfährt dadurch über ihre relativ große Masse eine hohe Beschleunigungskraft. Über den Hebelarm wird diese Kraft auf den Riegel 6 übertragen, so dass der belastete Riegel 6 geschlossen bleibt. Zum Halten der Kopfstütze 10 benötigt der Riegel 6 nur wenig Gegenkraft, da sich zwischen dem Riegel 6 und dem Träger 11 eine entsprechend gestaltete schiefe Ebene befindet.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Kopfstütze (10) für Fahrzeuge, insbesondere Kraftfahrzeuge, wobei die Kopfstütze (10) schwenkbar an einem Haltebügel befestigt ist, der am Rückenteil eines Sitzes anbringbar ist, wobei die Kopfstütze (10) in der aufgeschwenkten Gebrauchslage mittels einer Verriegelung (6, 7, 8) verriegelbar ist und nach Entriegelung in eine Nichtgebrauchslage verschwenkbar ist, **dadurch gekennzeichnet, dass** die Verriegelung durch manuelle Verschwenkung der Kopfstütze (10) aus der Gebrauchslage in die Nichtgebrauchslage entriegelbar ist und dass auf die Verriegelung in der Gebrauchslage eine Gewichtsmasse (7) einwirkt, die bei einer crashbedingten Beschleunigung im Wesentlichen in Normalfahrtrichtung des Fahrzeuges eine Entriegelung verhindert.

2. Kopfstütze nach Anspruch 1, **dadurch gekennzeichnet, dass** die Kopfstütze (10) aus der Gebrauchslage in Normalfahrtrichtung nach vorn in die Nichtgebrauchslage schwenkbar ist.

3. Kopfstütze nach einem der Ansprüche 1 oder 2, **dadurch gekennzeichnet, dass** die Kopfstütze (10) als Hohlschale (1) ausgebildet ist, die außenseitig vorzugsweise vollständig gepolstert und/oder mit einem Überzug versehen ist und die innerhalb des Hohlraumes, der von der Hohlschale (1) umgeben ist, das Ende des Haltebügels und den Verriegelungsmechanismus samt Gewichtsmasse (7) aufnimmt.

4. Kopfstütze nach einem der Ansprüche 1 bis 3, **dadurch gekennzeichnet, dass** mit dem Haltebügel ein Träger (5,9) starr verbunden ist, der eine Verriegelungskontur aufweist, dass der Träger (5,9) in die als Hohlteil (1) ausgebildete Kopfstütze (10) hineinragt und dass innerhalb der hohlen Kopfstütze (10) ein Riegel (6) angeordnet und an der Kopfstütze (10) schwenkbeweglich befestigt ist sowie die auf den Riegel (6) einwirkende, diesen in Schließrichtung beaufschlagende Gewichtsmasse (7) schwenkbeweglich befestigt ist.

5. Kopfstütze nach einem der Ansprüche 1 bis 4, **dadurch gekennzeichnet, dass** die Bestandteile des des Mechanismus der Verriegelung in Gebrauchslage der Kopfstütze (10) oberhalb des Haltebügels angeordnet sind.

6. Kopfstütze nach Anspruch 4, **dadurch gekennzeichnet, dass** am Träger (5,9) die Verriegelungskontur in Form einer als schiefe Ebene ausgebildeten Riegeleingriffsfläche (11) ausgebildet ist und der Riegel (6) einen entsprechend geformten als schiefe Ebene ausgebildeten Verriegelungsvorsprung (15) aufweist, der in der Verriegelungslage an der Riegeleingriffsfläche (11) anliegt.

7. Kopfstütze nach einem der Ansprüche 1 bis 6, **dadurch gekennzeichnet, dass** die an der Kopfstütze (10) befestigten Verriegelungselemente und die Gewichtsmasse (7) um zur Schwenkachse der Kopfstütze (10) parallele Achsen schwenkbeweglich angeordnet sind.

8. Kopfstütze nach einem der Ansprüche 1 bis 7, **dadurch gekennzeichnet, dass** an dem kopfstützenseitigen Verriegelungselement, insbesondere an dem klinkenartigen Riegel (6), ein Hebel (16) anliegt und in der Gebrauchslage der Kopfstütze (10) in Verriegelungslage hält, wobei der Hebel (16) oberhalb des Verriegelungselementes an der Kopfstütze (10) angelenkt ist, die Gelenkachse parallel zur Schwenkachse der Kopfstütze (10) gerichtet ist, und am Hebel (16) die Gewichtsmasse (7) nach Art eines Pendels an einer in der Gebrauchsstellung nach unten gerichteten Verlängerung (17) angeordnet ist, so dass der Hebel (16) bei einer crashbedingten Beschleunigung des Fahrzeuges in Normalfahrtrichtung fest gegen das Verriegelungselement und dieses fest gegen das gestellfeste Verriegelungsteil angedrückt ist.

9. Kopfstütze nach einem der Ansprüche 1 bis 8, **dadurch gekennzeichnet, dass** die Verriegelung bei in Gebrauchslage befindlicher Kopfstütze (10) durch Federkraft unterstützt in Schließlage gehalten ist.

10. Kopfstütze nach einem der Ansprüche 4 oder 5-9 sofern abhängig von Anspruch 4, **dadurch gekennzeichnet, dass** zwischen Riegel (6) und Kopfstütze (10) eine Feder eingespannt ist, die den Riegel (6) in Schließrichtung beaufschlagt.

11. Kopfstütze nach einem der Ansprüche 8 oder 9 sofern von Anspruch 8 abhangig, **dadurch gekennzeichnet, dass** zwischen dem auf das Verriegelungselement, insbesondere den Riegel (6), einwirkenden Hebel (16) und der Kopfstütze (10) eine Feder (8) eingespannt ist, die den Hebel (16) in Schließrichtung beaufschlagt.

12. Kopfstütze nach einem der Ansprüche 1 bis 11, **dadurch gekennzeichnet, dass** die Kopfstütze (10) aus der Nichtgebrauchslage gegen die Kraft einer Feder (3) bewegbar ist.

13. Kopfstütze nach Anspruch 12, **dadurch gekennzeichnet, dass** zwischen Bügel und Kopfstütze (10) eine Feder (4) eingespannt ist, mittels derer die Kopfstütze (10) in die Nichtgebrauchslage verschwenkbar ist.

## Claims

1. Headrest (10) for vehicles, in particular motor vehicles, wherein the headrest (10) is pivotably fixed to a retaining bracket which can be attached to the back part of a seat, wherein the headrest (10) can be locked in the upward-pivoted use position by means of a lock (6, 7, 8) and, after unlocking, can be pivoted into a non-use position, **characterised in that** the lock can be unlocked by manually pivoting the headrest (10) out of the use position and into the non-use position, and **in that** a weight (7) acts on the lock in the use position and, in the event of a crash-induced acceleration essentially in the normal direction of travel of the vehicle, prevents unlocking.

2. Headrest according to claim 1, **characterised in that** the headrest (10) can be pivoted forwards in the normal direction of travel out of the use position and into the non-use position.

3. Headrest according to one of claims 1 or 2, **characterised in that** the headrest (10) is designed as a hollow shell (1) which is preferably completely padded on the outside and/or provided with a cover and which, inside the hollow space enclosed by the hollow shell, accommodates the end of the retaining bracket and the locking mechanism together with the weight (7).

4. Headrest according to one of claims 1 to 3, **characterised in that** a support (5, 9) which has a locking contour is rigidly connected to the retaining bracket, **in that** the support (5, 9) protrudes into the headrest (10) designed as a hollow part (1), and **in that** a catch (6) is arranged inside the hollow headrest (10) and is attached to the headrest (10) in a pivotable manner, and the weight (7) which acts on the catch (6) and biases it in the closing direction is also attached in a pivotable manner.

5. Headrest according to one of claims 1 to 4, **characterised in that** the components of the mechanism of the lock are arranged above the retaining bracket in the use position of the headrest (10).

6. Headrest according to claim 4, **characterised in that**, on the support (5, 9), the locking contour is designed in the form of a catch latching surface (11) configured as a slanted plane, and the catch (6) has a correspondingly shaped locking protrusion (15) which is configured as a slanted plane and which bears against the catch latching surface (11) in the locked position.

7. Headrest according to one of claims 1 to 6, **characterised in that** the lock elements attached to the headrest (10) and the weight (7) are arranged such that they can pivot about axes parallel to the pivot axis of the headrest (10).

8. Headrest according to one of claims 1 to 7, **characterised in that** a lever (16) bears against the headrest-side lock element, in particular against the pawl-type catch (6), and keeps it in the locked position in the use position of the headrest (10), wherein the lever (16) is attached to the headrest (10) in an articulated manner above the lock element, the axis of articulation is oriented parallel to the pivot axis of the headrest (10), and the weight (7) is arranged on the lever (16) in the manner of a pendulum on an extension (17) which points downwards in the use position, so that the lever (16), in the event of a crash-induced acceleration of the vehicle in the normal direction of travel, is firmly pressed against the lock element and the latter is firmly pressed against the lock part which is fixed to the frame.

9. Headrest according to one of claims 1 to 8, **characterised in that**, when the headrest (10) is in the use position, the lock is held in the closed position in a manner assisted by a spring force.

10. Headrest according to one of claims 4 or 5-9 when dependent on claim 4, **characterised in that** a spring is inserted between the catch (6) and the headrest (10), which spring biases the catch (6) in the closed direction.

11. Headrest according to one of claims 8 or 9 when dependent on claim 8, **characterised in that** a spring (8) is inserted between the lever (16) acting on the lock element, in particular on the catch (6), and the headrest (10), which spring biases the lever (16) in the closed direction.

12. Headrest according to one of claims 1 to 11, **characterised in that** the headrest (10) can be moved out of the non-use position counter to the force of a spring (3).

13. Headrest according to claim 12, **characterised in that** a spring (4) is inserted between the bracket and the headrest (10), by means of which spring the headrest (10) can be pivoted into the non-use position.

## Revendications

1. Appui-tête (10) pour véhicules, notamment pour véhicules automobiles, ledit appui-tête (10) étant fixé, avec faculté de pivotement, à un étrier de retenue pouvant être monté sur le dossier d'un siège, ledit appui-tête (10) pouvant être verrouillé dans la position d'utilisation relevée par pivotement, au moyen d'un système de verrouillage (6, 7, 8), et pouvant pivoter à une position de non-utilisation à l'issue d'un déverrouillage, **caractérisé par le fait que** le système de verrouillage peut être déverrouillé par pivotement manuel imprimé à l'appui-tête (10) de la position d'utilisation à la position de non-utilisation ; et **par le fait que**, dans la position d'utilisation, ledit système de verrouillage est soumis à l'action d'un contrepoids (7) empêchant un déverrouillage lors d'une accélération résultant d'une collision, pour l'essentiel dans la direction de déplacement normal du véhicule.

2. Appui-tête selon la revendication 1, **caractérisé par le fait que** ledit appui-tête (10) peut être animé de pivotements vers l'avant dans la direction de déplacement normal, depuis la position d'utilisation jusqu'à la position de non-utilisation.

3. Appui-tête selon l'une des revendications 1 ou 2, **caractérisé par le fait que** ledit appui-tête (10) est réalisé sous la forme d'une coque creuse (1) qui est extérieurement munie, de préférence, d'un rembourrage intégral et/ou d'un revêtement et qui reçoit, à l'intérieur de la cavité ceinturée par ladite coque creuse (1), l'extrémité de l'étrier de retenue et le mécanisme de verrouillage incluant le contrepoids (7).

4. Appui-tête selon l'une des revendications 1 à 3, **caractérisé par le fait qu'**un support (5, 9), relié rigidement à l'étrier de retenue, est doté d'un profil de verrouillage ; **par le fait que** ledit support (5, 9) pénètre dans l'appui-tête (10) réalisé sous la forme d'une pièce creuse (1) ; et **par le fait qu'**un verrou (6) est logé à l'intérieur de l'appui-tête creux (10) et est fixé audit appui-tête (10) avec mobilité pivotante, le contrepoids (7), agissant sur ledit verrou (6) et sollicitant ce dernier dans la direction de fermeture, étant fixé avec mobilité pivotante.

5. Appui-tête selon l'une des revendications 1 à 4, **caractérisé par le fait que** les éléments constitutifs du mécanisme du système de verrouillage sont situés au-dessus de l'étrier de retenue en position d'utilisation dudit appui-tête (10).

6. Appui-tête selon la revendication 4, **caractérisé par le fait que** le profil de verrouillage est réalisé, sur le support (5, 9), sous la forme d'une surface (11) de venue en prise du verrou, conçue comme un plan incliné ; et ledit verrou (6) présente une protubérance de verrouillage (15) de configuration correspondante, conçue comme un plan incliné et portant, dans la position de verrouillage, contre ladite surface (11) de venue en prise dudit verrou.

7. Appui-tête selon l'une des revendications 1 à 6, **caractérisé par le fait que** les éléments de verrouillage et le contrepoids (7), fixés audit appui-tête (10), sont agencés avec mobilité pivotante autour d'axes parallèles à l'axe de pivotement dudit appui-tête (10).

8. Appui-tête selon l'une des revendications 1 à 7, **caractérisé par le fait qu'**un levier (16) est en applique contre l'élément de verrouillage situé côté appui-tête, en particulier contre le verrou (6) du type cliquet, et maintient ce dernier en position de verrouillage dans la position d'utilisation dudit appui-tête (10), sachant que ledit levier (16) est articulé sur ledit appui-tête (10) au-dessus dudit élément de verrouillage, que l'axe d'articulation est orienté parallèlement à l'axe de pivotement dudit appui-tête (10), et que le contrepoids (7) est disposé sur ledit levier (16), à la manière d'une pièce oscillante, sur un prolongement (17) dirigé vers le bas dans la position d'utilisation, de sorte que, lors d'une accélération du véhicule dans la direction de déplacement normal, provoquée par une collision, ledit levier (16) est pressé fermement contre l'élément de verrouillage et presse fermement ce dernier contre la pièce de verrouillage faisant corps avec le châssis.

9. Appui-tête selon l'une des revendications 1 à 8, **caractérisé par le fait que**, lorsque ledit appui-tête (10) occupe une position de non-utilisation, le système de verrouillage est maintenu en position fermée avec l'assistance d'une force élastique.

10. Appui-tête selon l'une des revendications 4 ou 5-9 rattachées à la revendication 4, **caractérisé par le fait qu'**un ressort, bandé entre le verrou (6) et ledit appui-tête (10), sollicite ledit verrou (6) dans la direction de fermeture.

11. Appui-tête selon l'une des revendications 8 ou 9 rattachée à la revendication 8, **caractérisé par le fait qu'**un ressort (8), bandé entre ledit appui-tête (10) et le levier (16) agissant sur l'élément de verrouillage, en particulier sur le verrou (6), sollicite ledit levier (16) dans la direction de fermeture.

12. Appui-tête selon l'une des revendications 1 à 11, **caractérisé par le fait que** ledit appui-tête (10) peut être sorti de la position de non-utilisation en opposition à la force d'un ressort (3).

13. Appui-tête selon la revendication 12, **caractérisé par le fait qu'**un ressort (4), bandé entre l'étrier et ledit appui-tête (10), permet d'imprimer des pivotements audit appui-tête (10) jusqu'à la position de non-utilisation.
